# EUROPEAN PATENT APPLICATION

(11) **EP 4 426 017 A1**
(43) Date of publication of application: **04.09.2024**
(21) Application number: 23159352.6
(22) Date of filing: 01.03.2023
(51) Int. Cl.: H04W 52/02, H04L 41/0833, H02J 50/00, G06F 1/32

(54) **TECHNIQUES TO REDUCE ENERGY EMISSION OF A SERVICE**

(71) Applicant: Deutsche Telekom AG, 53113 Bonn (DE)
(72) Inventor: LAUSTER, Reinhard, St. Pölten (AT)
(74) Representative: Braun-Dullaeus Pannen Emmerling Patent- & Rechtsanwaltspartnerschaft mbB

(57) **Abstract**

Techniques reducing energy emissions of a service used by a user, wherein the method comprises the following steps:
• Requesting a service by a user equipment towards a network;
• Determining operational units that are required to run the service along with associated parameters requested for the service;
• Retrieving operational energy data of the service, wherein the operational energy data comprises information of the energy consumption and/or of the respective energy source;
• Comparing the operational energy data of the service with an energy profile and creating an energy report based on the comparison;
• Providing the energy report by signaling means of the UE to the user, providing the energy report to the operating system of the UE, to a QoS adapter and/or to an App of the UE that provides the service;
• Changing the operational units and/or the associated parameters of the service based on the energy report to reduce the energy emission of the service.

## Description

The invention relates to a method, a network, communication network, an user equipment (UE) and to a computer program to reduce energy emission of a user requested service using a data connection, in particular an IP connection (or based on a related IP data connection), from an operator.

The awareness in our society with respect to energy saving techniques becomes more and more important. Due to the ongoing electrification of almost all aspects in our daily lives that typically goes along with the wish to use "green", i.e. renewable, energy resources, it becomes more and more important to save energy whenever possible.

Especially for future 6G networks, energy-saving techniques are considered as a major issue. Nevertheless, this also applies to current 4G, 5G, Wi-Fi and fixed network systems. In particular, it is the goal of the EU to enable massive digital green transition towards low carbon footprint of vertical industries.

A key part to reach those emission goals is the reduction of energy consumption of all users.

Hence, it is the task of the invention to provide techniques to the user so that he can steer his energy consumption in order to become "greener" when he uses a service via a data connection. Greener means within the context of this invention that the user gets an awareness of energy consumption of the used serve and can reduce his energy consumption and/or he uses more renewable energy sources like wind or solar means.

This object is solved by the features of the independent claims.

The features of the various aspects of the invention described below or the various examples of implementation may be combined with each other, unless this is explicitly excluded or is technically impossible.

Furthermore, the terms first, second, third and the like in the description and in the claims are used for distinguishing between similar elements and not necessarily for describing a sequential or chronological order. It is to be understood that the terms so used are inter- changeable under appropriate circumstances and that the embodiments of the invention described herein are capable of operation in other sequences than described or illustrated herein.

When this text talks about energy emissions, this term comprises energy consumption and/or emission of CO2 and/or an abstracted energy class. So, within the context of this invention it is to be understood that even a service that is being provided with a totally renewable energy source, like wind energy, can reduce its energy emission if it is implemented on a server that requires less energy. That the switching from a coal based energy source to a wind energy source results in a reduction of energy emission, should be totally clear. Typically, the service is provided via the data plane of the network operator - in that sense, the service can be called a data service. Hence, it is to be understood that the service is not restricted to only provide services related to data but to various kinds of services that can be requested over a data connection or over a communication link.

According to a first aspect of the invention, a method to reduce energy emissions of a service used by a user on his user equipment (UE) is disclosed, wherein the method comprises the following steps:
- Requesting a service accessible via a data connection by a user equipment towards a network, in particular to a network operator and/or a service provider;
   ∘ the service can for example be a computational task, a communication task (like running an online video conference) or video/audio streaming or a machine type communication (internet of things);
   ∘ the service uses a data connection, which can be provided by the network operator to which the user is being subscribed to and/or by a third party service provider. In case of video streaming as well as in the case of other services, it is typically the case that the network operator and the third party service provider (like Netflix) provide the video streaming service together because the service provider uses the network infrastructure of the network operator to deliver the content the user;
- Determining operational units that are required to run the service along with associated parameters requested for the service;
   ∘ in order to determine the amount of emissions caused running the service, it is necessary to know which operational units work together to run the service along with the associated parameters, the parameters can comprise parameters that are required for the data connection, because also those parameters (higher or lower QoS values) have an impact on the outcome of the energy emissions;
   ∘ operational units to provide the service can be servers on which the service is being implemented, used data connections/communication links over which the data of the services is being transmitted to the user equipment, base stations and the like. One could say operational units comprises all the parts (e.g. internal services/software components) within the radio (RAN) and/or core network that are used to run the service.
   ∘ the parameters can be at least QoS values of the service, IP addresses and/or energy sources of the respective operational units that provide the service. In general, the higher the QoS values are, the higher the energy emission will be to run the service. Due to the IP address it is possible to determine the communication length of the service to the UE; in general, the higher the communication length is, the higher the energy emission will be to run the service.
- Retrieving operational energy data of the service, wherein the operational energy data comprises information of the energy consumption and/or of the respective energy source;
   ∘ the operational energy data can be obtained and/or listed for every single operational unit that is used to provide the service;
   ∘ possible energy resources can be renewable energy sources like solar energy, wind energy, water energy. Those are being considered as being "green" energy sources and can be labeled accordingly. Other possible energy sources are nuclear power plant, gas power plant, coal power plant. Those can be abstraction considered as being "yellow" or "red" energy resources depending on their actual CO2 emission and can be labeled accordingly;
   ∘ hence, this step leads to the knowledge of how the energy of the service is made up;
   ∘ it is of advantage if the network operator performs the step of retrieving the operational energy data of the service because it provides the operational units. If a third-party service provider is being involved, the network operator and the third-party service provider can be configured to exchange the operational energy data of the service accordingly;
   ∘ the operational energy data can be retrieved or obtained from the user, UE, network, service provider and/or the service producer;
- Comparing the operational energy data of the service with an energy profile and creating an energy report based on the comparison;
   ∘ the energy profile serves the purpose of providing energy specifications with respect to the service. The energy profile can comprise a value of a maximum energy consumption of the service, maximum QoS values of the service and/or information about the energy sources that provide energy; the energy profile can comprise this kind of information for every operational unit involved in providing the service;
   ∘ these specifications can be interpreted as the goal to be reached. For example, the energy profile can comprise the information that at least 50% of the energy to run the service shall be provided by green energy sources;
   ∘ if all the goals of the energy profile are reached, a positive energy report can be created. This basically means that no action is being necessary to further reduce the level of emissions with respect to the energy profile; if not all goals of the energy profile are reached, a negative energy report can be created. This basically means that action is being necessary to further reduce the level of emission;
   ∘ in the case of the negative energy report, the negative energy report can list which operational unit need to be adapted with respect energy resources and/or QoS values in order to match the goals of the energy profile;
   ∘ the energy profile can be stored within the network and/or within the UE;
   ∘ the energy report can be created by the network and/or by the UE;
- Providing the energy report by signaling means of the UE to the user, providing the energy report to the operating system of the UE, providing the energy report to an QoS adapter, providing the energy report to an App of the UE that is associated the service, providing the energy report to the network operator and/or to a service provider that provides the service; It is also possible to provide the energy report can also be provided to a software midlayer/enabler of the UE;
   ∘ Many different actors can be involved in providing the service, so that the energy report can be provided to each of those actors so that they can perform appropriate actions as discussed below. As an example, in the case of video streaming the UE is involved because it requests, processes and/or displays the stream to the user; the network operator is being involved because he provides the communication links/the data connection for the video data; the service provider is involved because the stream is hosted and delivered by its servers;
   ∘ In principle, all of those actors can trigger an action to save emission according to energy policies or one of those actors can signal such an action to the other actors; However, if the triggering is associated to the UE, then the user can remain in control of starting the actions;
   ∘ the energy report that is being shown to the user, for example by means of the screen of the UE, can be configured to provide visual information regarding the emissions of the service. Items like green leafs and/or the number of green leafs can indicate how green the services being currently operated; hence, the energy report can comprise energy labels;
   ∘ the energy report can also be provided to the operating system of the UE and/or to the app of the that provides the service because those two units are involved in providing the service and have the capability of triggering actions in case of a negative energy report;
- Changing the operational units and/or the associated parameters of the service based on the energy report to reduce the energy emission of the service.
   ∘ possible transmission paths of the energy report can be the control plane (e.g. NAS, SIP) or the user plane (e.g. GTP, IP v6 segment routing, or HTTP application protocol based);
   ∘ this provides the advantage that the user is being efficiently informed about sustainability information regarding the service. In case of providing the energy report to the user, this results in a guided human-machine interaction to efficiently reduce the energy emission of the service. The user can interact with an inputting interface of his UE to reduce the energy emission of the service. For that purpose, the user can adapt QoS values accordingly or he can trigger a signal towards the network in order to that the network adapts the operational units according to the energy report. The user has also the possibility to close the service on his UE.
   ∘ in case that the network operator creates and/or receives the energy report, it is also possible that the network operator automatically triggers the emission reduction by changing and/or adapting the operational units and/are the associated parameters without sending the energy report to the UE;
   ∘ in case that the service provider operator creates and/or receives the energy report, it is also possible that the service provider automatically triggers the emission reduction by changing and/or adapting the operational units and/are the associated parameters without sending the energy report to the UE;
   ∘ in case of providing the energy report to the operating system, the QoS adapter (which will be explained in the following) or the App the energy emission of the service can be reduced in an automated way for example by adjusting QoS settings of the service or by triggering a corresponding signal towards the network in order that the network adapts the operational units according to the energy report.

Hence, emissions that go along with running the service can be efficiently reduced to become "greener".

In an embodiment, changing or adapting of the operational units comprises:
- selecting an operational unit that gets its energy from another energy source, in particular a greener energy source,
   ∘ for example, a server on which the service runs and that receives its energy from a coal power plant is exchanged with server that receives its energy from wind power;
- selecting an operational unit that is closer to the UE,
   ∘ the longer the communication distance between the UE and the service is, the more energy needs to be used. Hence, if at least some of the tasks of the service can be shifted to operational units closer to the UE, emissions can be reduced;
- adapting a communication link between the server and the UE, and/or
   ∘ depending on the kind of the communication link, the energy consumption to transfer the data of the service to the UE can change. In general, changing from a mobile communication link to a fixed line communication link will result in a reduction of emissions;
- selecting a more efficient operational unit.
   ∘ For example, a newer server can have more efficient energy management so that emissions can be reduced simply changing this operational unit. The operational unit can be more efficient with respect to cooling and/or computing.

In an embodiment, changing of the associated parameters of the service comprises:
- adapting QoS values of the service, in particular lowering the QoS values of the service,
   ∘ for example, a lower bandwidth of the data rate requires less energy
- using other codecs to run the service, and/or
   ∘ in case of video and/or audio processing and/or streaming, this can result in reduction of energy emission;
- changing the starting time and/or the duration time of the service.
   ∘ The availability of renewable energy can depend on time. So it is possible to shift, for example, background processes of the service (e.g. downloading) to starting time in which renewable energy sources are available.

In an embodiment, the user selects an ECO Mode on his UE, the operating system of the UE switches to the ECO Mode, a QoS adapter module switches to ECO Mode and/or the App switches to the ECO Mode, wherein the ECO Mode triggers the changing the operational units and/or the associated parameters.

This has the effect that the ECO Mode is an indicator to adapt the operational units and/or the parameters of the service in a way that energy consumption is being reduced. Furthermore, an ECO Mode functionality has the advantage that the user is also able to turn the ECO Mode off again, for example if he wants better QoS performance. In particular, a corresponding ECO Mode signal can be sent to the network so that the network and/or the service provider take the foregoing discussed actions to reduce energy emission.

It can be the case that an App cannot switch to ECO Mode automatically or that there are no options that the user can select such an ECO Mode - simply because those features are not implemented within the app. In this case, the QoS adapter can be placed within the communication link between the app and the service within the network and can adapt traffic in both directions in a way that reduced QoS values result so that the service within the network and/or the app are forced into believing that only these lower QoS values are available. This leads to the technical effect that the service and/or the app adjust to those lower QoS values, wherein this results in a reduction of energy consumption. The QoS adapter can be implemented within the operating system of the UE and is of special advantage when combining with legacy apps.

In an embodiment, an ECO Mode Signal is send by the UE to the network, wherein the network adapts operational units and/or parameters of the service according to the ECO Mode Signal. The ECO Mode Signal can comprise information which of the operational units and/or parameters shall be adapted. It is possible to obtain this information from the energy report.

In an embodiment, the ECO Mode is activated or the ECO Mode Signal is send based on approaching or trespassing an emission budget of the user. This leads to the technical effect that the network operator can more efficiently set up his communication network because it is less likely that the users consume more energy than it is allowed according to their emission budget. Additionally, this is an efficient means in order to prevent that the user consumes too much energy.

In an embodiment, the ECO Mode is activated or the ECO Mode Signal is send based on analyzing the data flow of the service. For example, in case of video streaming, the UE can comprise means to detect if advertisement is being currently streamed to the UE. In this case, it is possible to block the streaming of the video data and only to transmit the audio signal, which results in a reduction of energy consumption, wherein the user recognizes based on the audio signal that a film continues.

In an embodiment, the ECO Mode is activated or the ECO Mode Signal is send based on analyzing behavior of the user.

A UE can analyze based on data capturing means, like a camera, if the user is informed of the UE while the service video streaming is being active. If the UE concludes that the user is currently not watching the screen, it is possible to block the streaming of the video data and only to transmit the audio signal, which results in a reduction of energy consumption. If the UE detects that the user is watching the screen again, it can undo the blocking of the video data.

In an embodiment, the ECO Mode Signal is send by the UE to the service, wherein the service adapts operational units and/or parameters of the service according to the ECO Mode Signal.

This has the advantage, that also the third-party service provider who is not part of the network of the network operator can be triggered to initiate measures to reduce energy emission.

In an embodiment, the operational energy data are resolved with respect of time and/or location.

This provides the advantage that it is possible to use energy operational data that is as close as possible to the energy consumption of the service as if it would be run at this specific time and at this specific location. This is in particular of advantage in the case if the energy operational data is being assessed before the service actually is started. Because in this case it is not possible to measure the real energy consumption of the service at this time point.

In an embodiment, the energy profile is user and/or service specific. This provides the advantage that it is possible to tailor the energy profile to the individual needs of the user and/or the service. The energy profile can be stored within the UE and/or within the network.

According to a second aspect of the invention, a QoS-Adapter is disclosed, wherein the QoS is been configured to provide artificial QoS-values to an UE/and or the service comprising
- a first communication interface configured to exchange data with a service and/or with a network;
- a second communication interface configured to exchange data with an App of the UE that requests the service;
- a processor configured to provide artificial QoS-values to the App and/or to the service based on the energy report.

This provides the effect that the QoS-Adapter can be placed into the communication path of the service and the UE so that all the traffic between the UE and the service goes through the QoS-Adapter. The processor of the QoS-Adapter can be configured to analyze the energy report and conclude from the energy report that in order to reach an emission reduction it is necessary to reduce QoS values like the bandwidth in a defined way. If this is the case, the QoS-Adapter adapts all the data traffic that goes through it accordingly that the service and/or the app are tricked into believing that only these QoS values are possible even if the actual QoS values can be higher. The QoS-Adapter provides the advantage that it can be implemented within the operating system of the UE to reduce the energy emission of the service without having to adapt any other operational unit of the service. It is also possible to implement the QoS-Adapter within the network - in this case it could serve as a QoS-Adapter for multiple UEs. It is possible that the QoS-Adapter comprises a puffer module to artificially decrease the bandwidth value.

According to a third aspect of the invention, a user equipment is being disclosed that comprises
- a first communication interface configured to exchange data with a service and/or with a network;
- an App that is associated to the service and/or to the QoS-adapter described above
- an operating system, and
- a processor.

The processor of the UE can generate and forward an energy report, in particular based on the operational energy data and the energy profile, to the network. This leads to the technical effect that the network can be provided with data in order to change or adapt the operational units and/or the associated parameters of the service to reduce the energy emission of the service. The network is been configured to perform those changes or adaptations according to the method described above.

It is also possible as an alternative that the processor is being configured to generate or to receive the energy report, and to forward the energy report to its operating system, to the App, and/or to the QoS-Adapter, wherein the APP, the operating system, and/or the QoS-adapter is configured to switch to ECO-Mode based on the energy report. In this case switching to the ECO-Mode also results in an effective reduction of emission as described above.

The UE can be a smart phone, tablet, a computer but also smart devices like a tumble dryer or a washing machine.

According to a fourth aspect of the invention, a communication network, in particular a communication network of a network operator, is disclosed, wherein the communication network is configured to
- receive a service request by a UE;
- determine operational units that are required to run the service along with associated parameters requested for the service;
- retrieve operational energy data of the service, wherein the operational energy data comprises information of the energy consumption and/or of the respective energy source;
   ∘ i) transmit the operational energy data to the UE,
      and/or
   ∘ ii) compare the operational energy data of the service with an energy profile and creating an energy report based on the comparison and sending the energy report to the UE
- change the operational units and/or the associated parameters of the service based on the energy report to reduce the energy emission of the service.

The network provides basically the same advantages as described within the context of the method.

According to a fifth aspect of the invention, a computer program comprising instructions which, when the program is executed by a server of a network operator, causes the network to carry out the steps of the method of claim 1 is disclosed.

The computer program provides basically the same advantages as described within the context of the method.

In the following, preferred implementation examples of the present invention are explained with reference to the accompanying figure:
- Fig. 1:: shows a method according to the invention to reduce energy emissions when using a service;
- Fig. 2:: shows a communication system that is being configured to carry out the method of Fig. 1;
- Fig. 3a:: shows operational energy data of the service;
- Fig. 3b:: shows an energy profile;
- Fig. 4:: shows an inventive QoS-adapter;

In the following, numerous features of the present invention are explained in detail by means of preferred embodiments. The present disclosure is not limited to the specifically named combinations of features. Rather, the features mentioned here can be combined arbitrarily into inventive embodiments, unless this is expressly excluded below.

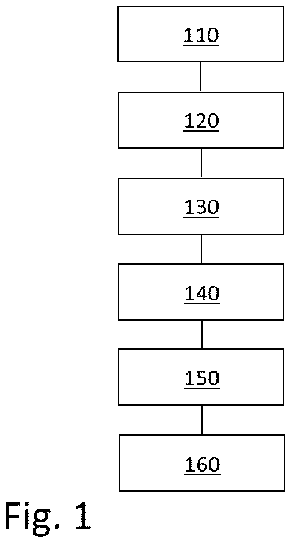

Fig. 1 shows a method 100 according to the invention to reduce energy emissions when using a service. The method 100 comprises the following steps:
step 110: Requesting a service by a user equipment towards a network;
step 120: Determining operational units that are required to run the service along with associated parameters requested for the service;
step 130: Retrieving operational energy data of the service, wherein the operational energy data comprises information of the energy consumption and/or of the respective energy source;
step 140: Comparing the operational energy data of the service with an energy profile and creating an energy report based on the comparison;
step 150: Providing the energy report by signaling means of the UE to the user, providing the energy report to the operating system of the UE, to a QoS adapter and/or to an App of the UE that provides the service;
step 160: Changing the operational units and/or the associated parameters of the service based on the energy report to reduce the energy emission of the service.

This provides the advantage, that the UE, the network and/or the user is provided with information that enables to assess an insight on how the energy of a service is being set up, that means what is the energy consumption and/or which energy sources are used to provide that energy. This can help to sharpen the awareness of the user with respect to his energy and omission consumption and to motivate the user to change his usage behavior. This information can also be used in an automated way by the network, by the operating system of the UE and/or applications that run the service to trigger energy-saving actions, in particular to activate an ECO-Mode.

Further variations and complements of the method 100 are being described in the following.

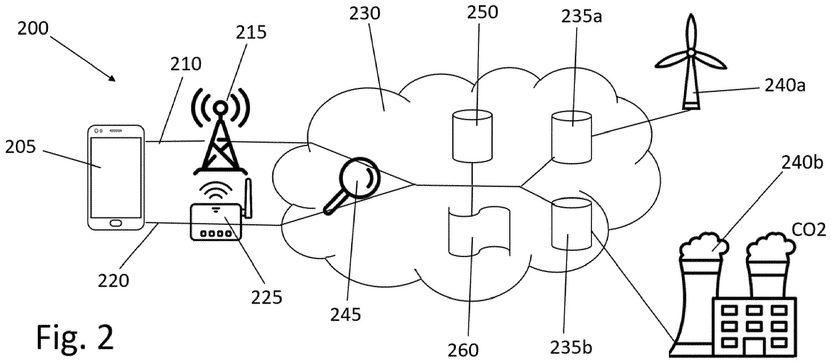

Fig. 2 shows a communication system 200 that is being configured to carry out the method of Fig. 1.

Fig. 2 shows that a user equipment (UE) 205, in the embodiment of smart phone 205, is being connected over a mobile communication path 210 by using a base station 215 and/or over a home network communication path 220 by using a home router 225 to a network 230. The network 230 is in particular the home network 230 to which the UE 205 of the user is being subscribed to and provides the service.

The service that can be a computational task or other services like video streaming/communication establishment. The service can be implemented on a first server 235a or on a second server 235b. Different energy sources are being used to provide the servers 235a,b with their operational energy. Server 235a is powered by wind energy 240a, wherein server 235b is powered by coal energy 240b. The service 235a,b can be equipped with energy measuring units to measure and actual energy consumption when running the service. A further energy monitoring units 245 can be placed within the communication system 200 to assess the energy consumption of the service with respect to all operational units that are used to provide the service. The communication system 200, in particular the network 230, also comprises an adaption unit 250 that is being configured to change the operational units involved in the service and/or the parameters associated with the service in order to reduce energy emission of the service. In particular, the adaption unit 250 is being configured to carry out the steps 120, 130, 140, 150 and/or 160 of Fig. 1.

The operational energy data can be retrieved as follows:
The operational energy data can be obtained by measuring units 245 that collect the energy characterizing information data of a radio access network, a core network, and/or a data network of a third party service provider. The energy characterizing information comprises the energy consumption and/or the kind of the energy source 240.

It is also possible to calculate the operational energy data from energy consumption models of the various network entities that can be used to provide the service. These models shall also include information about the energy consumption and/or the kind of the energy source 240 of each of the operational units involved in providing the service:
It is also possible to obtain the operational energy data from tables 260 that list the energy characterizing information of the operational units involved in providing the service. The entries of these tables can be refilled with values that have been recorded in previous service usages.

The operational energy data can be resolved with respect to time and/or location as to account as best as possible to the actual use case of the service. In particular, the operational energy data describes the energy consumption of the operational units resolved for different QoS values of the service.

The UE 205 can be provided with emission information or operational energy data from the core network 230 via a control plane signaling and/or user plane signaling. It is also possible that this information can be provided to an application of the UE 205 that offers an ECO-Mode to the user.

The operational energy data can comprise information about the energy in Watt and/or emission information as mg of CO2.

The operational energy data can be sent at start, and/or an intermediate state of the dedicated data session of the service, wherein the dedicated data session is being defined for the IP flow that is being used (IP addresses of the user plane, DNN, APN, and/or application ID). The operational energy data and/or the energy report can be transmitted via the control plane as a NAS signaling but also via the user plane GTP, over the application layer and/or via SMS to the UE 205. The information of the energy report can be used by the operating system and/or applications to display for the user the currently consumed energy emissions. This information can be visualized to the user in a way that it is easy to judge how "green" the service is being run. For example, the visualization of three green leafs can indicate a low emission situation. Additionally to the data visualization for the user, the energy emission information can be provided to the UE 405 and/or to the application in particular in the form of the energy report. The application and or the UE can be configured to reduce the emission based on this energy report. The application can offer to the user the ECO Mode by means of a button on the screen. If the ECO Mode is being activated by pressing the button, the application reduces the resolution, allows a higher bit rate error rate and/or can use a different codec if the service is video streaming. The UE can calculate emission consumption in a cumulative way and displays information to the user or the application. The user and/or the application can define minimum and/or maximum emission values that can be stored within the UE and/or the SIM card. The following actions can be triggered by the UE, APP and/or the network: i) modifying the data connection depending on the minimum or maximum values of energy commission, ii) to create an alarm sound or visual notification if a predefined energy emission value is being reached; iii) switch off the data connection when the energy has been trespassed.

In an embodiment of the invention, the data service is an IMS service: The user can be notified and/or operational units can be adapted to reduce energy emissions when the user uses an IMS service (VoLTE, VoNR, RCS,..). The energy report can be provided by the network for used for IMS services (VoLTE, VoNR, RCS,...) and be display on the user interface of the UE and/or used by the network to reduce energy emission.

In particular, the following steps can be executed that do not contradict with the features presented above that describe the more general case. The following ideas are only further possible embodiments. 1) The Core Network has different options to collect and analyses resource consumption date via operational reporting. reporting. For each situate condition of the User behavior analysis of collected values and calculation of energy/emission can be done: i) Collection of data from elements-reporting in radio and core network per data session and per subscriber, ii) Statistic calculation models to analysis current operational reported data and calculate related resources and energy/emission of a certain IMS session of a user, and/or iii) Pre-calculated table for energy/emission with relation to operational parameters for radio usage data and QoS parameter and application usage; 2) The IMS client of the UE can be provided with emission information from the IMS network i.e. using SIP signaling mechanism. Alternative: IMS applications (VoLTE, VoNR, RCS,..) running on the UE can be provided with emission/energy information and use it to offer for customer energy saving mode; 3) Emission information of all used resources (core and radio) for a certain IMS service and can comprise of energy (e.g. Watt) or emission (e.g. mg CO2); 4) Emission/Energy information should be sent at start and/or end and/or intermediate of a dedicated IMS SIP session; 5) The emission information can be an absolute value or incremental and also a kind of "budget consumed" depending on core network calculation of information is static periodical, absolute or subsequent or incremental; 6) This information shall be transported via control plane i.e. SIP. The operating system and/or applications can now use such data to display for the user in a proper manner the current consumed energy or emissions. Alternative: IMS Application (VoLTE, VoNR, RSC) can offer to the user a specific energy saving mode (e.g. modify codec, reduce resolution of pictures or Video)

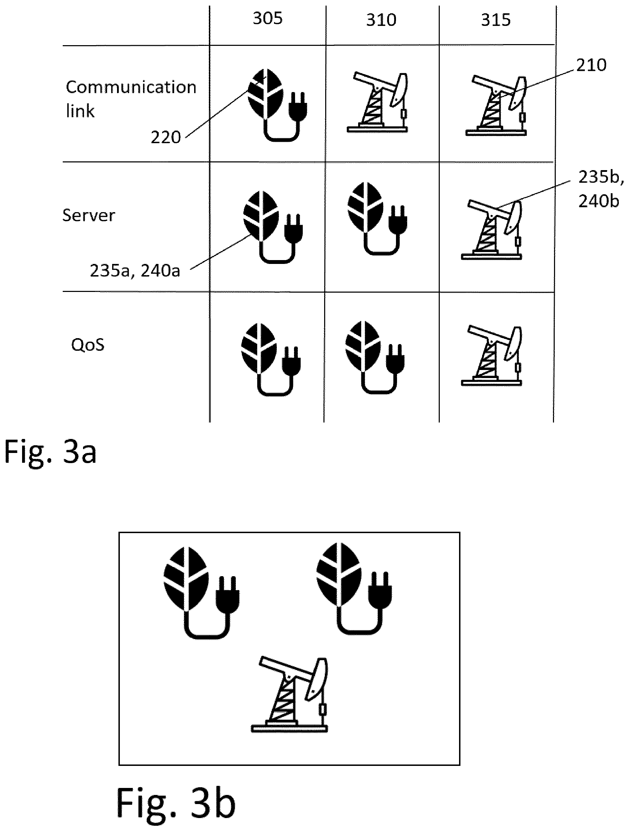

The inventive method will now be explained with reference to Fig. 2, and Fig. 3a,b.

Fig. 3a shows operational energy data of the service for the respective operational units and/or parameters involved in providing the service for three different cases which are represented by the columns 305, 310 and 315. The leaf icon is a "green" emission indicator, wherein the oil rig icon represents a high energy emission case that can be seen as a "red" emission indicator that produces high levels of CO2.

With respect to the operational units of Fig. 2, this means that in column 305 the communication link is the home network communication path 220 that typically comprises at least a fixed line section like xDSL or Fiber that needs less energy than the mobile communication path 210; the server 235a receives its energy from the windmill 240a; and the QoS parameters are set to lower values, like half of the maximal available bandwidth, in order to reduce energy consumption. This means that in column 310 the communication link is the mobile communication path 220; the server 235a receives its energy from the windmill 240a; and the QoS parameters are set to lower values, like half of the maximal available bandwidth, in order to reduce energy consumption.

This means that in column 315 the communication link is the mobile communication path 220; the server 235b receives its energy from the coil power plant 240a; and the QoS parameters are set to maximum possible values.

If the UE 205 request the service towards the network 230, the network determines the operational units that are required to run the service along with the associated parameters requested for the service. The process of retrieving the operational energy data of the service results in one of the columns 305, 310, 315 of Fig. 3a, wherein the network 230 also has the knowledge that other operational units with other energy emission characteristics can also be used to provide the service, in particular that operational units can be replaced with each other.

Fig 3b represents an energy profile of the service and/or of the user. The energy profile of Fig 3b shows that the service shall be provided with two green energy emission indicators and with one red energy emission indicator. It is further possible that the energy profile specifies the emission indicators on the level of the operational units. This could mean that the server is to be run with the green energy emission indicator while the QoS values can show a red energy emission indicator.

An algorithm implemented on the UE 205 and/or within the network 230, in particular on the adaption unit 250, can compare the use cases according to the columns 305, 310 and 315 to the energy profile as follows:
If the operational energy data of columns 305 and 310 are compared to the energy profile of Fig. 3b, then the energy emission values of the service result in an energy report that states that no changing of the operational units and/or the associated parameters of the service is necessary

In case of the column 315, the comparison yields in an energy report that states that the User, the UE 205 and/or the network 230 need to trigger a changing of the operational units and/or the associated parameters of the service. Hence, the adaption unit 250 of the network can substitute the server 235b with the server 235a and user can change the settings of the operating system or of the app that runs the service in order to switch to lower QoS values.

This results in the effect that instead of a high energy emission use case of the service according to column 315, the emissions of the service are reduced according to the use case of column 310.

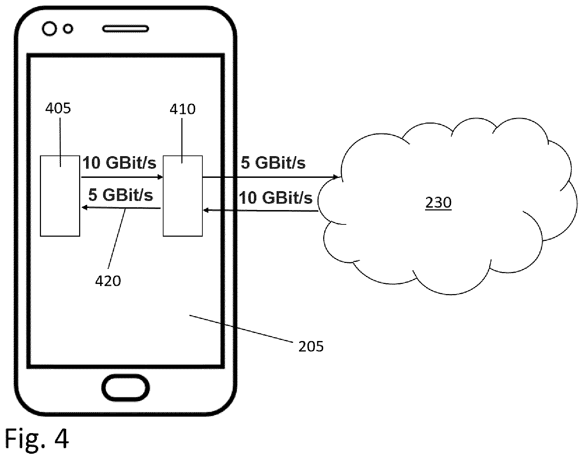

Fig. 4 shows a technical solution in the case that one of the network 230 and/or the App 405 request service are not capable of adjusting the operational units and/or the parameters according to the energy report. In particular, the app 405 comprises no ECO Mode. This functionality will now be explained using video streaming as an example. The app 405 can be a video streaming App like Netflix that requests the video streaming service from the network 230. An QoS-Adapter 410 is being placed in the communication path 420 (the communication path 420 can be the mobile communication path 210 and/or the home network communication path 220). The QoS-Adapter 410 is being configured to carry out the steps 120, 130, 140, 150 and/or 160 of Fig. 1. This basically means that the QoS-Adapter 410 can switch into an ECO Mode to reduce energy emissions. The ECO Mode of the QoS-Adapter 410 has the technical effect that QoS parameters are changed in order to reduce the energy emission of the service. For example, if the network 230 provides a data rate of 10 GBit/s to the app 405, the QoS-Adapter 410 reduces the data rate to 5 GBit/s. The same reduction can take place for the data rate the app 405 provides to the network 230. This has the technical effect that the app 405 and/or the network 230 need to adapt to this lower data rate because they are tricked into believing that this is the maximum data rate that is being achievable. In case of video streaming, this can result in a transmission of the video stream with another codec and/or with a lower resolution that results in reduction of energy emission.

In general, this QoS-Adapter 410 can be software module that is being implemented within the UE 405 or within the network 230. The QoS-Adapter 410 can be controlled by the user or can be configured to work in an automated fashion as described above. QoS-Adapter 410 can be configured to adapt the data connection of the UE 405 as explained above and/or the data endpoint (APN, DNN) in the network 230 to select a green profile so that the app would then use the data channel according to the "green" profile.

## Claims

1. A method to reduce energy emissions of a service used by a user,
wherein the method comprises the following steps:
• Requesting a service by a user equipment towards a network, in particular towards a telecommunication network;
• Determining operational units that are required to run the service along with associated parameters requested for the service;
• Retrieving operational energy data of the service, wherein the operational energy data comprises information of the energy consumption and/or of the respective energy source and/or an abstract label;
• Comparing the operational energy data of the service with an energy profile and creating an energy report based on the comparison;
• Providing the energy report by signaling means of the UE to the user, providing the energy report to the operating system of the UE, to a QoS adapter, to an App of the UE that is associated to the service, to a network operator that is related to the service and/or to a service provider that runs the service;
• Changing the operational units and/or the associated parameters of the service based on the energy report to reduce the energy emission of the service.

2. The method of any the previous claims, wherein changing of the operational units comprises:
• selecting an operational unit that gets its energy from another energy source, in particular a greener energy source,
• selecting an operational unit that is closer to the UE,
• selecting an operational unit that is closer to the service provider or service endpoint,
• adapting a communication link between the server of the service provider and the UE, and/or
• selecting a more efficient operational unit.

3. The method of any the previous claims, wherein changing of the associated parameters of the service comprises:
• adapting QoS values of the service, in particular lowering the QoS values of the service,
• changing the starting time and/or the duration time of the service and/or
• changing radio technology used for the service.

4. The method of any the previous claims, wherein the user selects an ECO Mode on his UE, the operating system of the UE switches to the ECO Mode, a QoS adapter module and/or the App switches to the ECO Mode, wherein the ECO Mode triggers the changing the operational units and/or the associated parameters.

5. The method of any the previous claims, wherein an ECO Mode Signal is send by the UE to the network and/or to the service provider, wherein the network and/or the service provider adapts operational units and/or parameters of the service according to the ECO Mode Signal.

6. The method of any of the claims 4 to 5, wherein the ECO Mode is activated or the ECO Mode Signal is send based on approaching or trespassing an emission budget of the user.

7. The method of any of the claims 4 to 5, wherein the ECO Mode is activated or the ECO Mode Signal is send based on analyzing the data flow of the service.

8. The method of any of the claims 4 to 5, wherein the ECO Mode is activated or the ECO Mode Signal is send based on analyzing behavior of the user.

9. The method of any the previous claims, wherein an ECO Mode Signal is send by the UE to the service, wherein the service adapts operational units and/or parameters of the service according to the ECO Mode Signal.

10. The method of any the previous claims, wherein the operational energy data are resolved with respect of time and/or location.

11. The method of any the previous claims, wherein the energy profile is user and/or service specific.

12. QoS-Adapter to provide artificial QoS-values to an App and/or a service comprising
• a first communication interface configured to exchange data with a service and/or with a network;
• a second communication interface configured to exchange data with an App of the UE that requests the service;
• a processor configured to provide artificial QoS-values to the App and/or to the service based on the energy report.

13. User Equipment comprising
• a first communication interface configured to exchange data with a service and/or with a network;
• an App that is associated to the service and/or the QoS-adapter of claim 12,
• an operating system,
• a processor configured
∘ to generate and forward an energy report to the network
or
∘ to generate or to receive the energy report, and to forward the energy report to its operating system, to the App, and/or to the QoS-Adapter, wherein the APP, the operating system, and/or the QoS-adapter is configured to switch to ECO-Mode based on the energy report.

14. Communication network, wherein the communication network is configured
• to receive a service request by a UE;
• to determine operational units that are required to run the service along with associated parameters requested for the service;
• to retrieve operational energy data of the service, wherein the operational energy data comprises information of the energy consumption and/or of the respective energy source;
∘ i) to transmit the operational energy data to the UE,
and/or
∘ ii) to compare the operational energy data of the service with an energy profile and creating an energy report based on the comparison and sending the energy report to the UE;
• to change the operational units and/or the associated parameters of the service based on the energy report to reduce the energy emission of the service.

15. A computer program comprising instructions which, when the program is executed by a server of a network operator, causes the network to carry out the steps of the method of claim 1.

## Amended claims

### Amended claims in accordance with Rule 137(2) EPC.

1. A method to reduce energy emissions of a service used by a user,
wherein the method comprises the following steps:
• Requesting a service by a user equipment to a telecommunication network;
• Determining operational units that are required to run the service along with associated parameters requested for the service;
• Retrieving operational energy data of the service, wherein the operational energy data comprises information of the energy consumption and/or of the respective energy source;
• Comparing the operational energy data of the service with an energy profile and creating an energy report based on the comparison, wherein the energy profile provides energy specifications of the service;
• Providing the energy report by signaling means of the UE to the user, providing the energy report to the operating system of the UE, to a QoS adapter, to an App of the UE that is associated to the service, to a network operator that is related to the service and/or to a service provider that runs the service;
• Changing the operational units and/or the associated parameters of the service based on the energy report to reduce the energy emission of the service.

2. The method of any the previous claims, wherein changing of the operational units comprises:
• selecting an operational unit that gets its energy from another energy source,
• selecting an operational unit that is closer to the UE,
• selecting an operational unit that is closer to the service provider or service endpoint,
• adapting a communication link between the server of the service provider and the UE, and/or
• selecting a more efficient operational unit.

3. The method of any the previous claims, wherein changing of the associated parameters of the service comprises:
• adapting QoS values of the service,
• changing the starting time and/or the duration time of the service and/or
• changing radio technology used for the service.

4. The method of any the previous claims, wherein the user selects an ECO Mode on his UE, the operating system of the UE switches to the ECO Mode, a QoS adapter module and/or the App switches to the ECO Mode, wherein the ECO Mode triggers the changing the operational units and/or the associated parameters.

5. The method of any the previous claims, wherein an ECO Mode Signal is sent by the UE to the network and/or to the service provider, wherein the network and/or the service provider adapts operational units and/or parameters of the service according to the ECO Mode Signal.

6. The method of any of the claims 4 to 5, wherein the ECO Mode is activated or the ECO Mode Signal is sent based on approaching or trespassing an emission budget of the user.

7. The method of any of the claims 4 to 5, wherein the ECO Mode is activated or the ECO Mode Signal is sent based on analyzing the data flow of the service.

8. The method of any of the claims 4 to 5, wherein the ECO Mode is activated or the ECO Mode Signal is send based on analyzing behavior of the user.

9. The method of any the previous claims, wherein an ECO Mode Signal is send by the UE to the service, wherein the service adapts operational units and/or parameters of the service according to the ECO Mode Signal.

10. The method of any the previous claims, wherein the operational energy data are resolved with respect of time and/or location.

11. The method of any the previous claims, wherein the energy profile is user and/or service specific.

12. QoS-Adapter to provide artificial QoS-values to an App and/or a service comprising
• a first communication interface configured to exchange data with a service and/or with a network;
• a second communication interface configured to exchange data with an App of the UE that requests the service;
• a processor configured to provide artificial QoS-values to the App and/or to the service based on the energy report.

13. User Equipment comprising
• a first communication interface configured to exchange data with a service by using a network;
• an App that is associated to the service and/or the QoS-adapter of claim 12,
• an operating system,
• a processor configured
∘ to generate and forward an energy report to the network or
∘ to generate or to receive the energy report, and to forward the energy report to its operating system, to the App, and/or to the QoS-Adapter, wherein the App, the operating system, and/or the QoS-adapter is configured to switch to ECO-Mode based on the energy report.

14. Communication network, wherein the communication network is configured
• to receive a service request by a UE;
• to determine operational units that are required to run the service along with associated parameters requested for the service;
• to retrieve operational energy data of the service, wherein the operational energy data comprises information of the energy consumption and/or of the respective energy source;
∘ i) to transmit the operational energy data to the UE, and/or
∘ ii) to compare the operational energy data of the service with an energy profile and creating an energy report based on the comparison and sending the energy report to the UE;
• to change the operational units and/or the associated parameters of the service based on the energy report to reduce the energy emission of the service.

15. A computer program comprising instructions, which when the program is executed by a server of a network operator, causes the network to carry out the steps of the method of claim 1.
